Europäisches Patentamt

European Patent Office

Office européen des brevets

(19)

(11) Veröffentlichungsnummer: **0 030 947**
**B1**

(12) **EUROPÄISCHE PATENTSCHRIFT**

(45) Veröffentlichungstag der Patentschrift:
02.03.83

(51) Int. Cl.³: **F 26 B 17/26**, F 26 B 3/22

(21) Anmeldenummer: 80901114.1

(22) Anmeldetag: 24.06.80

(86) Internationale Anmeldenummer:
**PCT/AT 80/00019**

(87) Internationale Veröffentlichungsnummer:
**WO 81/00021 (08.01.81 Gazette 81/1)**

(54) **TROCKNUNGS- ODER KÜHLVORRICHTUNG FÜR SCHÜTTGÜTER WIE Z.B. KALK ODER KOHLE.**

(30) Priorität: 25.06.79 AT 4422/79

(43) Veröffentlichungstag der Anmeldung:
01.07.81 Patentblatt 81/26

(45) Bekanntmachung des Hinweises auf die Patenterteilung:
02.03.83 Patentblatt 83/9

(84) Benannte Vertragsstaaten:
DE FR GB LU NL SE

(56) Entgegenhaltungen:
DE-A-2 104 515
FR-A-1 117 514
GB-A-829 389
GB-A-1 008 350
US-A-1 693 747
US-A-3 800 427

(73) Patentinhaber: WAAGNER-BIRO
AKTIENGESELLSCHAFT, Stadlauer-Strasse 54,
A-1221 Wien (AT)

(72) Erfinder: BECKMANN, Georg, Jacquingasse 55/10,
A-1030 Wien (AT)
Erfinder: HILLINGER, Bruno, Dreisteingasse 20,
A-2371 Hinterbrühl (AT)

(74) Vertreter: Wallner, Gerhard, Dipl.-Ing., c/o Waagner-Biro
Aktiengesellschaft Patentabteilung
Stadlauer-Strasse 54, A-1221 Wien (AT)

BUNDESDRUCKEREI BERLIN

Trocknungs- oder Kühlvorrichtung für Schüttgüter wie z. B. Kalk oder Kohle

Die Erfindung betrifft eine Trocknungs- oder Kühlvorrichtung für Schüttgüter, wie z. B. Kalk oder Kohle, mit einer als Wärmebehandlungseinrichtung ausgebildeten Vibrationsrinne, durch welche das Schüttgut von der Aufgabeseite zur Abgabeseite strömt und die Vibrationsrinne gewellte und in Förderrichtung angeordnete Zwischenwände aufweist, die den Förderquerschnitt unterteilen und ein Heiz- oder Kühlmedium leiten.

Aus der FR-A-1 117 514 und der GB-A-1 008 350 ist es bekannt, Vibrationstrockner mit beheizten Wänden oder in das Schüttgut eintauchenden Heizflächen auszubilden, wobei der Vibrationstrog durch gekühlte oder beheizte Zwischenwände unterteilt ist oder wobei im Vibrationstrog beheizte Rohre vorgesehen sind. Diese Konstruktionen haben den Nachteil der mangelnden Durchmischung des Gutes bei größeren Schüttguthöhen, so daß bei wärmeempfindlichen Gütern Überhitzungen vorkommen, die wieder Anlaß für Anbackungen geben.

Die vorliegenden Erfindung hat es sich zur Aufgabe gestellt den genannten Schwierigkeiten zu begegnen und auch bei hohen Schüttgutlagen eine gleichmäßige Schüttguterhitzung bzw. Schüttgutabkühlung zu erreichen, sowie Anbackungen zu vermeiden.

Die Erfindung ist dadurch gekennzeichnet, daß die Zwischenwände als Flossenrohrwände ausgebildet sind, die in Förderrichtung keine Unebenheiten und in vertikaler Richtung Bäuche und Vertiefungen zweier gegenüberliegender Wände jedes Teilquerschnittes zueinander versetzt angeordnet sind.

Die Erfindung ist in den Fig. 1 bis 3 beispielsweise und schematisch dargestellt. Es zeigt

Fig. 1 einen Schnitt durch eine Vibrationsrinne

Fig. 2 ein Detail aus Fig. 1 und

Fig. 3 einen Grundriß zu Fig. 1.

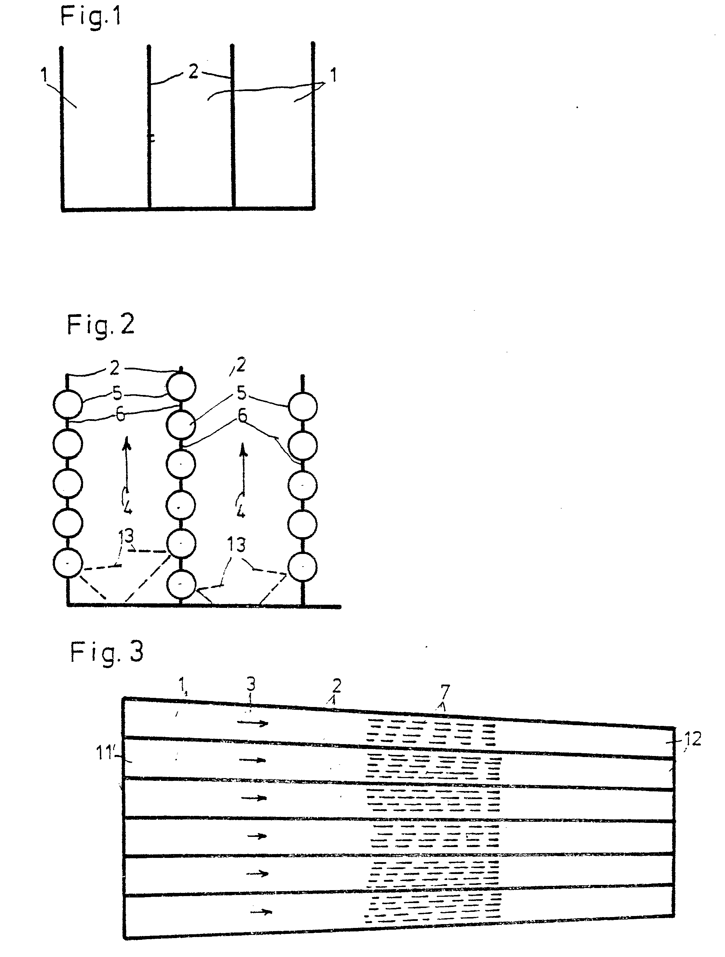

In Fig. 1 ist ein Schnitt durch eine Vibrationsrinne, die als Transportraum 1 ausgebildet ist, dargestellt, wobei die Zwischenwände 2 den Rinnenquerschnitt in drei Teilkanäle unterteilen.

Wie Fig. 2 zeigt sind die Zwischenwände 2 durch Flossenrohrwände gebildet, wobei bei benachbarten Flossenrohrwänden die Bäuche 5 und Vertiefungen 6, die jeweils von Rohren bzw. Stegen gebildet sind, zueinander versetzt angeordnet sind. Wird nun das Schüttgut in vertikaler Richtung 4 durch die Vibrationsbewegung angehoben, so stößt es im Randbereich an einen Bauch und prallt von diesem in Richtung Mitte des Teilkanales. Betrachtet man die Bewegung zweier Partikel, die jeweils an benachbarte Zwischenwände 2 aufprallen, so ergibt sich eine Durchmischung derselben, wie sie durch die strichlierten Linien 13 dargestellt sind. Durch diese Bewegung wird somit eine innige Stoffdurchmischung erreicht, wobei gleichzeitig auch die Kühl- oder Heizwirkung vergleichmäßigt wird, wodurch sichergestellt ist, daß am Ende des Teilkanales eine gleichmäßige Temperatur des Schüttgutes erzielt wird. Durch die Flossenrohrwände wird das kondensierende oder verdampfende Heiz- oder Kühlfluid geführt. Aus der Konstruktion ist ersichtlich, daß durch die Kanalwandungen 2 größere Wärmemengen an das Schüttgut abgegeben werden können als durch den Boden, so daß die erfindungsgemäße Konstruktion eine größere Leistungsdichte aufweist.

In Fig. 3 ist eine Vibrationsrinne im Grundriß dargestellt, wobei zwischen der Gutaufgabe 11 und der Gutübergabe 12 eine Absiebstrecke 7 vorgesehen ist, über welche während des Transportes des Schüttgutes das Feingut vom Grobgut getrennt werden kann. Man erkennt ferner, daß sich die Teilkanäle in Förderrichtung 3 von der Gutaufgabe 11 zur Gutübergabe 12 verengen, wodurch an der Stelle der Gutübergabe 12 eine größere Dichte des vibrierten Schüttgutes erreicht wird. Dieses Merkmal bedingt eine geringere Staubbelästigung an der Stelle der Schüttgutübergabe.

## Patentansprüche

1. Trocknungs- oder Kühlvorrichtung für Schüttgüter, wie z. B. Kalk oder Kohle, mit einer als Wärmebehandlungseinrichtung ausgebildeten Vibrationsrinne, durch welche das Schüttgut von der Aufgabeseite zur Abgabeseite strömt und die Vibrationsrinne gewellte und in Förderrichtung angeordnete Zwischenwände aufweist, die den Förderquerschnitt unterteilen und ein Heiz- oder Kühlmedium leiten, dadurch gekennzeichnet, daß die Zwischenwände (2) als Flossenrohrwände ausgebildet sind, die in Förderrichtung (3) keine Unebenheiten und in vertikaler Richtung (4) Bäuche (5) und Vertiefungen (6) aufweisen und daß die Bäuche (5) und Vertiefungen (6) zweier gegenüberliegender Wände jedes Teilquerschnittes zueinander versetzt angeordnet sind.

2. Vorrichtung nach Anspruch 1, dadurch gekennzeichnet, daß zwischen den Zwischenwänden der Vibrationsrinne (1) vorzugsweise in der Mitte, zwischen Gutaufgabe und Gutübergabe im Rinnenboden eine Absiebestrecke (7) für das Feingut angeordnet ist.

3. Vorrichtung nach Anspruch 1, dadurch gekennzeichnet, daß die Zwischenwände entsprechend der in Förderrichtung fortschreitenden Trocknung oder Absiebung den Förderquerschnitt verengend angeordnet sind.

## Claims

1. Plant for drying or cooling bulk materials, such as for example, lime or coal, comprising a vibratory channel which is constructed as heat treatment equipment and through which the bulk material flows from the charge side to the discharge side and that the vibratory channel comprises corrugated partitioning walls which are arranged in the conveying direction and which sub-divide the conveying cross-section and carry a heating or cooling medium, characterised in, that the partitioning walls (2) are designed as finned tube walls which do not have any unevenness in the conveying direction (3) and have bulges (5) and recesses (6) in the vertical direction (4) and that the bulges (5) and the recesses (6) of two opposite walls of each part cross-section are in a mutually staggered arrangement.

2. Plant according to claim 1, characterised in, that between the partitioning walls of the vibratory channel (1) preferably in the middle, a section (7) for screening the fine material is provided in the channel bottom between the material charging-point and the material transfer-point.

3. Plant according to claim 1, characterised in, that the partitioning walls are arranged to narrow the conveying cross-section, corresponding to the drying or screeening, which progresses in the conveying direction.


**Revendications**

1. Dispositif de séchage ou de refroidissement de matières en vrac, telles que par exemple de la chaux ou du charbon, comprenant une gorge conformée en dispositif de traitement thermique, à travers laquelle la matière en vrac s'écoule depuis le côté d'introduction au côté d'évacuation et qui est ondulée et comporte des parois intermédiaires orientées dans la direction de transport, ces parois intermédiaire subdivisant la section transversale de transport et guidant ou conduisant un fluide d'échauffement ou de refroidissement, caractérisé en ce que les parois intermédiaires (2) sont conformées aux parois tubulaires à ailettes, qui présentent pas d'inégalité dans la direction de transport (3) et sont pourvues dans la direction verticale (4) de ventres (5) et de creux (6), et en ce que les ventres (5) et les creux (6) de deux parois en regard de chaque section transversale sont décalés les uns par rapport aux autres.

2. Dispositif selon la revendication 1, caractérisé en ce qu'entre les parois intermédiaires de la gorge vibrante (1), avantageusement au milieu, entre l'endoit d'introduction de la matière et l'endroit de transfert ou d'évacuation de la matière est prévu dans le fond de la gorge un trajet de tamisage (7) pour la matière fine.

3. Dispositif selon la revendication 1, caractérisé en ce que les parois intermédiaires sont conformées de façon à produire un rétrécissement de la section transversale de transport suivant le séchage ou le tamisage progressant dans la direction de transport.

0 030 947

Fig.1

Fig.2

Fig.3